# EUROPÄISCHE PATENTSCHRIFT

(11) **EP 0 762 036 B1**
(45) Veröffentlichungstag und Bekanntmachung des Hinweises auf die Patenterteilung: **23.09.1998**
(21) Anmeldenummer: 96112648.9
(22) Anmeldetag: 06.08.1996
(51) Int. Cl.: F16L 37/088, B60T 17/04

(54) **Lösbare Steckverbindung für Druckluftanlagen in Fahrzeugen**
Releasable plug-in type connector for vehicle compressed air equipment
Raccord à fiche détachable pour l'équipement d'air comprimé dans les véhicules

(30) Priorität: 08.09.1995 DE 19533188
(43) Veröffentlichungstag der Anmeldung: 12.03.1997
(73) Patentinhaber: MAN Nutzfahrzeuge Aktiengesellschaft, 80976 München (DE)
(72) Erfinder: Kratz, Manfred, 82377 Penzberg (DE)

(56) Entgegenhaltungen:
- DE-A- 2 741 512
- FR-A- 2 545 908
- US-A- 3 453 005
- US-A- 4 703 958

## Beschreibung

Die Erfindung bezieht sich auf eine Steckverbindung für Druckluftanlagen in Fahrzeugen gemäß dem Oberbegriff des Anspruches 1.

In Druckluftanlagen von Fahrzeugen sind häufig Druckluftleitungen eingesetzt, an deren Anschluß- und Verbindungsarmaturen hohe Anforderungen der Funktionssicherheit gestellt werden. Als Anschluß- und Verbindungsarmaturen sind beispielsweise lösbare Steckverbindungen vorgesehen, die ein schnelles Verbinden, Anschließen oder Lösen von Druckluftleitungen ermöglichen.

Als Stand der Technik ist bereits eine Steckverbindung für Druckluftanlagen von Fahrzeugen bekannt (beispielsweise die handelsübliche VOSS-Steckverbindung 230 der Armaturenfabrik Hermann Voss, Wipperfürth, Katalog 230). Die bekannte Steckverbindung weist einen mit einer Druckluftleitung verbundenen Stecker auf, der mit seinem Schaft an ein Anschlußelement der Druckluftanlage ankuppelbar ist. Das Ankuppeln erfolgt über eine Halteklammer, die im Anschlußelement durch eine Überwurfmutter fixiert ist und in eine am Umfang des Steckerschaftes angeordnete Haltenut einrastet. Eine bei der Montage der Steckverbindung unter Umständen unentdeckt gebliebene Nichtverrastung von Stecker und Anschlußelement kann zu einer ungewollten Lösung dieser Steckverbindung bei Betrieb der Druckluftanlage führen. Im ungünstigsten Fall kann der damit verbundene, plötzliche Druckabfall innerhalb der Druckluftanlage des Fahrzeuges, beispielsweise bei Vorsehen einer pneumatisch betätigten Fahrzeugbremse, ein vom Fahrer unvorhersehbares Betätigen der Fahrzeugbremse auslösen und einen Unfall verursachen. Ein nicht vollständig im Anschlußelement der Druckluftanlage verrasteter Stecker ist ohne entsprechendes Werkzeug unter Umständen nicht - auch nicht bei Druckluftbeaufschlagung der Druckluftanlage vor Fahrtbeginn des Fahrzeuges - feststellbar.

Es ist daher Aufgabe der Erfindung, eine Steckverbindung der gattungsgemäßen Art so weiterzubilden, daß ein leckagebedingter Druckabfall innerhalb der Druckluftanlage eines Fahrzeuges mit einfachen Mitteln zumindest auf ein unkritisches Maß reduziert ist.

Diese Aufgabe wird erfindungsgemäß durch die kennzeichnenden Merkmale des Anspruches 1 gelöst.

Aufgrund der erfindungsgemäßen Lösung kann in vorteilhafter Weise ein unter Umständen nicht vollständig im Anschlußelement der Druckluftanlage verrasteter, bei Betrieb der Druckluftanlage im Lösen befindlicher Stecker infolge des in seine Haltenut einrastenden Federringes gefangen und gehalten werden. Durch die mittels Federring erzielte Sicherheitsverrastung von Stecker und Anschlußelement bleibt innerhalb der Druckluftanlage, beispielsweise an der pneumatisch betätigten Fahrzeugbremse, ein funktionserhaltender Sicherheitsdruck bestehen. Ein leckagebedingter, kritischer Druckabfall innerhalb der Druckluftanlage kann somit ohne großen, technischen Aufwand wirksam vermieden werden. Damit bleibt ein leckagebedingtes Betätigen der Fahrzeugbremsen unterbunden, womit einer Erhöhung der Verkehrssicherheit Rechnung getragen wird. Als Anschlußelement können verschiedene druckluftführende und anzuschließende Bauteile einer Druckluftanlage in Frage kommen, beispielsweise ein Pneumatikaggregat einer Fahrzeugbremse oder eine Anschlußmuffe einer Druckluftleitung.

Nach einem Merkmal der Erfindung kann der Federring bei Sicherheitsverrastung von Stecker und Anschlußelement mit seinen beiden Flanken bereichsweise sowohl eine erste Flanke der Stecker-Haltenut als auch eine dieser gegenüberliegend angeordneten Flanke der Überwurfmutter-Umfangsnut überdecken. Dadurch sind die einander gegenüberliegenden Flanken von Stecker-Haltenut und Überwurfmutter-Umfangsnut gegeneinander verriegelt und somit der Stecker über die Überwurfmutter im Anschlußelement gesichert.

Nach einem weiteren Merkmal der Erfindung weist der Federring eine Schlitzung auf, durch die - bei vollständiger Verrastung des Steckers im Anschlußelement - der Federring auf den Durchmesser des Steckerschaftes aufgeweitet und auf diesem aufsitzend, quasi in Wartestellung gehalten werden kann. Die Schlitzung des Federringes kann dabei wengistens 1/12 des Gesamtumfanges des Federringes betragen und ermöglicht so dessen ausreichende, elastische Verformung. Erst bei unvollständiger Verrastung des Steckers im Anschlußelement kann bei Betrieb der Druckluftanlage der Stecker aus der zentralen Durchgangsbohrung der Überwurfmutter infolge des Pneumatikdruckes herausgedrückt werden. Dabei passiert die Stecker-Haltenut den vom Steckerschaft in die Ringnut der Überwurfmutter gepreßten Federring. In diesem Fall rastet der Federring in die Haltenut ein und sichert so den Stecker in dem Anschlußelement.

Nach einem weiterführenden Merkmal der Erfindung kann die Haltenut des Steckers eine zweite, der ersten Flanke gegenüberliegend angeordnete Flanke aufweisen, die wenigstens zum Teil kegelig, beispielsweise angephast, ausgebildet ist. Dadurch kann das Aufweiten des Federringes bei Einschieben des Steckerschaftes in die zentrale Durchgangsbohrung der Überwurfmutter erleichtert werden.

Nach einem weiteren Merkmal der Erfindung, kann ein umfangs zwischen Anschlußelement und eingeführtem Stecker gegebener Ringspalt einen definierten Mindestabstand von 0,04 mm aufweisen. Abhängig von der Dimensionierung von Stecker und Anschlußelement kann der Ringspalt einen entsprechend größeren Mindestabstand, beispielsweise von 0,1 mm und mehr betragen. Durch den Ringspalt kann im Zusammenwirken mit der Schlitzung eine übersehene Nichtverrastung der Steckverbindung akustisch angezeigt werden. Dabei schließt infolge der Nichtverrastung Stecker und Anschlußelement nicht mehr druckdicht miteinander ab, wodurch ausreichende - für die Funktion der Druckluftanlage unkritische - Mengen an Druckluft hörbar über die Schlitzung des Federringes zum Ringspalt entweichen. Eine Nichtverrastung der Steckverbindung kann somit aufgrund dieser Geräuschbildung vor Fahrtbeginn des Fahrzeuges erkannt und die Verrastung der Steckverbindung zuverlässig nachgeholt werden.

Nach einem weiteren Merkmal der Erfindung kann der Federring in Federstahlwerkstoff ausgeführt sein. Es können jedoch auch andere, hierfür geeignete Werkstoffe verwendet sein.

Nachstehend ist die erfindungsgemäße Lösung anhand eines in der Zeichnung dargestellten Ausführungsbeispieles noch näher erläutert.

In der Zeichnung zeigen:
- Fig. 1: eine im Teillängsschnitt dargestellte Steckverbindung in vollständig verrastetem Zustand,
- Fig. 2: eine schematisierte, gemäß Fig. 1 im Längsschnitt dargestellte Steckverbindung im Zustand der Sicherheitsverrastung,
- Fig. 3: einen Federring der Steckverbindung gemäß Fig. 1 in der Draufsicht, und
- Fig. 4: schematisch die räumliche Darstellung der Einzelteile einer Steckverbindung nach Fig. 1.

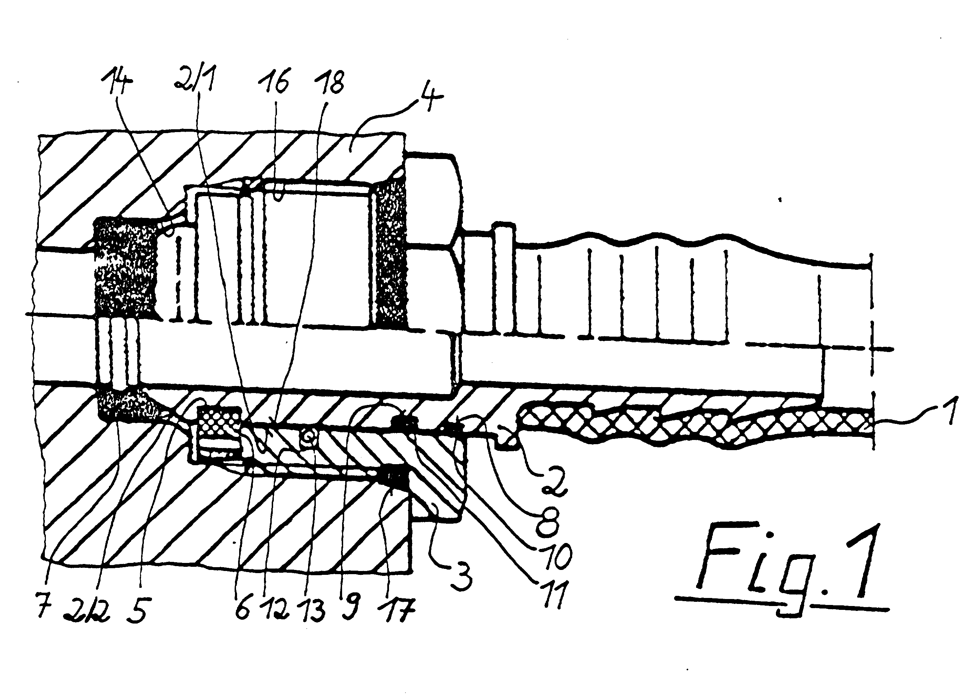

In der Zeichnung ist als Teil einer Druckluftanlage für Fahrzeuge eine Steckverbindung dargestellt, bei der ein mit einer Druckluftleitung 1 verbundener Stecker 2 an ein Anschlußelement 4 der Druckluftanlage ankuppelbar ist. In Fig. 1 besteht die Steckverbindung aus einer Druckluftleitung 1, einem darin eingepreßten Stecker 2 und einer diesen in einer zentralen Durchgangsbohrung 18 aufnehmenden Überwurfmutter 3. Diese ist mittels einer Verschraubung 16 fest im Anschlußelement 4 verankert.

Das in dieser Version gezeigte Anschlußelement 4 ist durch ein Pneumatikaggregat einer Fahrzeugbremse realisiert.

Der Stecker 2 weist endseitig seines Schaftes 2/1 eine an seinem Umfang angeordnete Haltenut 5 auf. In diese rastet bei Anschluß des Steckers 2 an das Anschlußelement 4 eine von der Überwurfmutter 3 in letzterem fixierte Halteklammer 6 ein. Anstelle einer Überwurfmutter können auch andere geeignete Bauteile verwendet sein.

Die Halteklammer 6 ist vorzugsweise geschlitzt ausgeführt und kann aus Kunststoff oder einem anderen, geeigneten Werkstoff gefertigt sein. Die Halteklammer 6 kann durch ein endseitig des Steckerschaftes 2/1 ausgebildetes Kegelprofil 2/2 bei der Montage geweitet werden und nach dem Einschieben des Steckers in die Überwurfmutter 3 in die Haltenut 5 einrasten. Durch das Kegelprofil 2/2 wird die Halteklammer 6 automatisch zentriert.

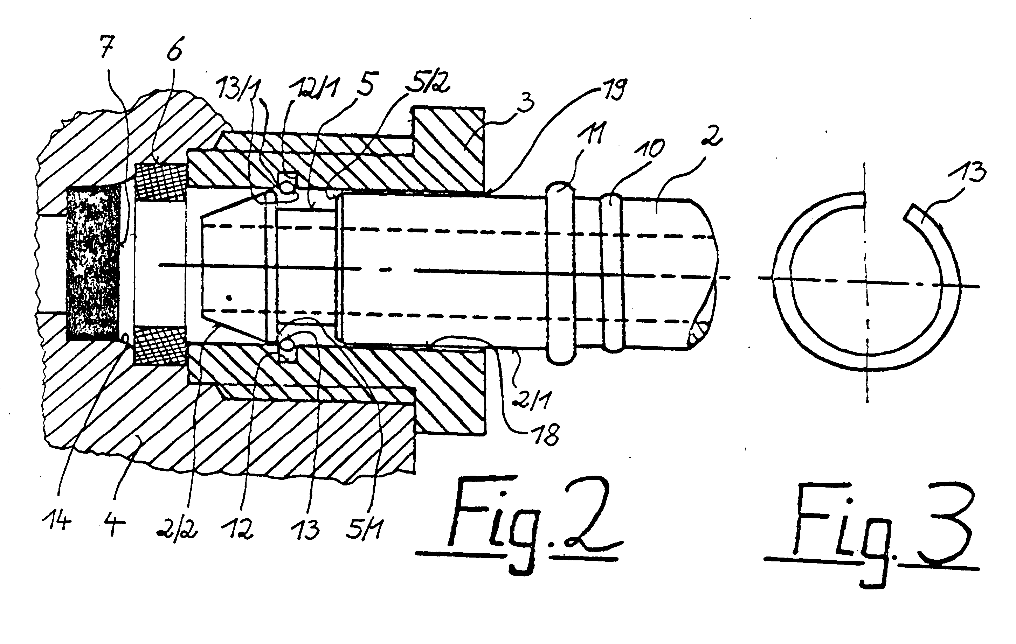

Des weiteren weist die zentrale Durchgangsbohrung 18 der Überwurfmutter 3 eine Ringnut 12 zur Aufnahme eines Federringes 13 auf (Fig. 1 und 2). Durch den Federring 13 kann bei nicht ordnungsgemäßer Verrastung des Steckers 2 dieser in der Überwurfmutter 3 gefangen und gehalten werden, wodurch der Druck in der Druckluftanlage aufrechterhalten bleibt. Ein leckagebedingtes Auslösen der Fahrzeugbremsen bleibt somit wirksam unterbunden.

Fig. 2 zeigt die - bei einer eventuellen Nichtverrastung von Stecker 2 und Anschlußelement 4 - wirksame Sicherheitsverrastung des Steckers 2 in der Überwurfmutter 3 mittels des Federringes 13. Dabei bewegt sich der nichtverrastete Stecker 2 infolge der Druckluft tendenziell aus der zentralen Durchgangsbohrung 18 der Überwurfmutter 3 heraus und wird bei Passieren der Haltenut 5 an dem - zunächst in zusammenziehfähiger Position befindlichen, am Steckerschaft 2/1 anliegenden - Federring 13 gefangen und mittels diesem verrastet. Der Stecker 2 wird somit im Befestigungselement 3 durch den Federring 13 verrastet.

Der Federring 13 überdeckt im Zustand der Sicherheitsverrastung mit seinen beiden Flanken 13/1 zumindest bereichsweise sowohl eine erste Flanke 5/1 der Stecker-Haltnut 5 als auch eine dieser gegenüberliegend angeordnete Flanke 12/1 der Überwurfmutter-Ringnut 12 und verriegelt somit beide letztgenannten Flanken 5/1, 12/1 gegeneinander. Die Kontur der Haltenut 5 ist so gestaltet, daß bei Einführen des Steckers 2 in die zentrale Durchgangsbohrung 18 - zwecks Verrastung - der Federring 13 von einer kegeligen zweiten Flanke 5/2 konfrontiert, aufgeweitet und anschließend vom Steckerschaft 2/1 quasi in Wartestellung gehalten wird. Bei wirksamer Sicherheitsverrastung von Stecker 2 und Überwurfmutter 3 hingegen wird der Federring 13 von der etwa senkrecht zur Haltenut 5 angeordneten ersten Flanke 5/1 konfrontiert, wodurch der Stecker 2 in der Überwurfmutter 3 gehalten wird.

In der hier gezeigten Version ist der Federring 13 aus Federstahlwerkstoff gefertigt, und die Überwurfmutter 3 in Kunststoff ausgeführt. Es können aber auch andere, geeignete Materialien verwendet sein. Durch das Vorsehen eines ausreichend großen Ringspaltes 19 zwischen zentraler Durchgangsbohrung 18 und Steckerschaft 2/1 kann bei eventueller Nichtverrastung der Steckverbindung dies akustisch durch ausreichend ausströmende, die Schlitzung des Federringes 13 und den Ringspalt 19 passierende Druckluft bemerkbar gemacht werden. Die somit erkannte Nichtverrastung der Steckverbindung kann vor Fahrtbeginn des Fahrzeuges erkannt und die Verrastung zuverlässig nachgeholt werden.

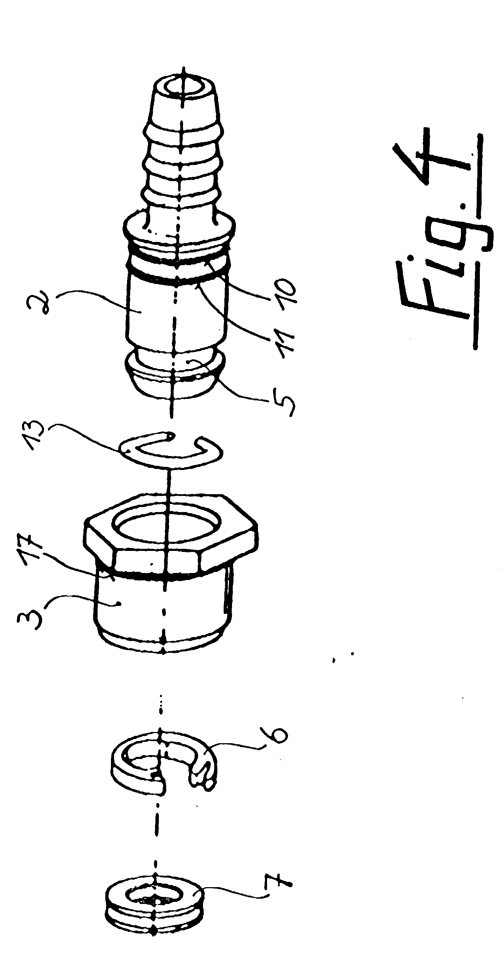

Gemäß der in Fig. 3 gezeigten Version weist der Federring 13 eine Schlitzung von wengistens 1/12 seines Gesamtumfanges auf. Infolge dieser Schlitzung liegt der innerhalb der ringförmigen Ringnut 12 angeordnete Federring 13 bei ordnungsgemäßer Verrastung von Stecker 2 und Anschlußelement 4 quasi in Wartestellung unter Spannung am Steckerschaft 2/1 an (Fig. 1).

Fig. 1 zeigt ferner ein endseitig am Grund der Überwurfmutter 3 angeordnetes Federelement 7. Dieses dient zur unmittelbaren Abdichtung von Stecker 2 und Anschlußelement 4. Das Federelement 7 kann aus Gummi gefertigt sein und ist in einer ringförmigen Kammer 14 am Bohrungsgrund der Verschraubung 16 der Überwurfmutter 3 innerhalb des Anschlußelementes 4 eingelegt. Die Höhe des Federelementes 7 bewirkt, daß der Stecker 2 nach dem Einrasten der Halteklammer 6 in die Haltenut 5 an diesem Federelement 7 unter axialer Vorspannung ansteht. Zur Seite der Druckluftleitung 1 hin, weist der Stecker 2 am Umfang seines Schaftes 2/1 zwei weitere Nuten 8, 9 auf, in die O-Ringe 10, 11 eingelegt sind. Der O-Ring 11 übernimmt die Abdichtung gegenüber dem Medium Druckluft. Der zweite O-Ring 10 verhindert das Eindringen von Verunreinigungen und kann gleichzeitig durch das Aufweisen einer Signalfarbe als optische Sichtkontrolle für das vollständige Verrasten des Steckers 2 im Anschlußelement 4 dienen. Die Überwurfmutter 3 weist außenseitig an ihrem Kopfansatz einen O-Ring 17 zur Abdichtung der Verschraubung 16 zwischen Überwurfmutter 3 und Anschlußelement 4 auf.

Fig. 4 zeigt in räumlicher Einzeldarstellung zur Veranschaulichung die unverbauten Bauteile 2, 3, 6, 7, 13 der Steckverbindung. Gemäß einer hier nicht gezeigten Version können auch mehrere Steckverbindungen zu einem Verbund zusammengefaßt sein.

## Patentansprüche

1. Lösbare Steckverbindung für Druckluftanlagen in Fahrzeugen mit einem mit einer Druckluftleitung (1) verbundenen Stecker (2), der mit seinem Schaft (2/1) an ein Anschlußelement (4) der Druckluftanlage ankuppelbar ist, über eine Halteklammer (6), die im Anschlußelement (4) durch eine Überwurfmutter (3) fixiert ist und in eine am Umfang des Steckerschaftes (2/1) angeordnete Haltenut (5) einrastet, dadurch gekennzeichnet,
daß in der zentralen Durchgangsbohrung (18) der Überwurfmutter (3) eine Ringnut (12) mit eingesetztem Federring (13) vorgesehen ist, der - für eine in Bezug auf die ordnungsgemäße Einbaulage axial versetzte Sicherheitsverrastung des Steckers (2) gegenüber dem Anschlußelement (4) - in die Haltenut (5) des Steckerschaftes (2/1) einrastbar ausgelegt ist.

2. Steckverbindung nach Anspruch 1, dadurch gekennzeichnet, daß der Federring (13) - bei Sicherheitsverrastung von Stecker (2) und Anschlußelement (4)-mit seinen beiden Flanken (13/1) sowohl eine erste Flanke (5/1) der Stecker-Haltenut (5) als auch eine dieser gegenüberliegend angeordnete Flanke (12/1), der Überwurfmutter-Ringnut (12) bereichsweise überdeckt und beide Flanken (5/1, 12/1) gegeneinander verriegelt.

3. Steckverbindung nach Anspruch 1 oder 2, dadurch gekennzeichnet, daß der Federring (13) eine Schlitzung aufweist, und daß die Schlitzung des Federringes (13) wenigstens 1/12 seines Gesamtumfanges beträgt.

4. Steckverbindung nach Anspruch 1 oder 2, dadurch gekennzeichnet, daß die Haltenut (5) des Steckers (2) eine zweite, der ersten Flanke (5/1) gegenüberliegende, wenigstens zum Teil kegelige Flanke (5/2) aufweist.

5. Steckverbindung nach Anspruch 1, dadurch gekennzeichnet, daß ein umfangs zwischen Überwurfmutter (3) und eingeführtem Steckerschaft (2/1) gegebener Ringspalt (19) einen definierten Mindestabstand von 0,04 mm aufweist.

6. Steckverbindung nach Anspruch 1, dadurch gekennzeichnet, daß der Federring (13) in Federstahlwerkstoff ausgeführt ist.

## Claims

1. Detachable plug-type connection for compressed-air systems in vehicles with a plug (2) connected with a compressed-air line (1), which plug (2) can, with its shaft (2/1), be coupled up to a connecting element (4) of the compressed-air system via a retaining clip (6) which is fixed in the connecting element (4) by means of a union nut (3) and locks into a retaining groove (5) provided on the circumference of the plug shaft, characterised in that in the central passage bore (18) of the union nut (3) a ring groove (12) with an inserted spring ring (13) is provided, which ring -to a achieve a safe locking which is axially offset with regard to the proper installation position and locks the plug (2) in relation to the connecting element (4)- is designed so that it can be locked into the retaining groove (5) of the plug shaft (2/1).

2. Plug-type connection according to Claim 1, characterised in that the spring ring (13) -if the plug (2) and the connecting element (4) are safety-locked- partially overlaps with its two flanks (13/1) both a first flank (5/1) of the plug retaining groove (5) and a flank (12/1) facing said flank (5/1) of the union-nut ring groove (12) and locks both flanks (5/1, 12/1) against each other.

3. Plug-type connection according to Claim 1 or 2, characterised in that the spring ring (13) is provided with a slit whose length is at least 1/12 of the entire circumference of the spring ring (13).

4. Plug-type connection according to Claim 1 or 2, characterised in that the retaining groove (5) of the plug (2) is provided with a second flank (5/2) which is at least partially cone-shaped and faces the first flank (5/1).

5. Plug-type connection according to Claim 1, characterised in that an annular circumferential gap (19) between the union nut (3) and the inserted plug shaft (2/1) shows a defined minimum distance of 0.04 mm.

6. Plug-type connection according to Claim 1, characterised in that the spring ring (13) is made from spring steel.

## Revendications

1. Liaison séparable à enfichage pour installations d'air comprimé équipant des véhicules automobiles, comprenant un connecteur enfichable (2) relié à une canalisation d'air comprimé (1) et qui peut être accouplé par sa tige (2/1) à un élément de raccordement (4) de l'installation d'air comprimé, par l'intermédiaire d'une pince de maintien (6) qui est fixée dans l'élément (4) par une collerette de fixation (3), la pince (6) venant se bloquer dans une rainure de maintien (5) portée par la périphérie de la tige (2/1) du connecteur
caractérisée en ce que
dans l'alésage central (18) traversant la collerette (3), il est prévu une rainure annulaire (12) dans laquelle est logée une bague élastique (13) configurée de manière à pouvoir venir se bloquer dans la rainure de maintien (5) de la tige (2/1) du connecteur, pour assurer un enclenchement de sécurité dans une position où le connecteur (2), par rapport à l'élément de raccordement (4) est décalé axialement par rapport à la position normale d'insertion.

2. Liaison à enfichage selon la revendication 1,
caractérisée en ce que
la bague élastique (13) - dans le cas d'enclenchement de sécurité du connecteur (2) et de l'élément (4) - recouvre localement par ses deux flancs (13/1) à la fois un premier flanc (5/1) de la rainure (5) de maintien du connecteur et un flanc (12/1) situé en regard du premier et appartenant à la rainure annulaire (12) de la collerette, avec verrouillage des deux flancs (5/1, 12/1) l'un par rapport à l'autre.

3. Liaison à enfichage selon la revendication 1 ou 2,
caractérisée en ce que
la bague élastique (13) présente une fente d'attache, cette fente occupant au moins (1/12) de la circonférence de la bague.

4. Liaison à enfichage selon la revendication 1 ou 2,
caractérisée en ce que
la rainure de maintien (5) du connecteur (2) présente un second flanc (5/2) au moins conique en partie et faisant face au premier flanc (5/1).

5. Liaison à enfichage selon la revendication 1,
caractérisée en ce qu'
une fente périphérique annulaire (19), séparant la collerette de fixation (3) et la tige (2/1) du connecteur enfiché, a une largeur minimale de 0,4 mm.

6. Liaison à enfichage selon la revendication 1,
caractérisée en ce que
la bague élastique (13) est réalisée en acier à ressort.
